(19) Europäisches Patentamt

European Patent Office

Office européen des brevets

(11) **EP 0 998 157 A2**

(12) **EUROPEAN PATENT APPLICATION**

(43) Date of publication:
03.05.2000 Bulletin 2000/18

(51) Int. Cl.⁷: **H04Q 7/38**

(21) Application number: **99120830.7**

(22) Date of filing: **25.10.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **26.10.1998 JP 30377498**

(71) Applicant: **NEC CORPORATION**
**Tokyo (JP)**

(72) Inventor: **Yamamoto, Masatoshi**
**Minato-ku, Tokyo (JP)**

(74) Representative:
**VOSSIUS & PARTNER**
**Siebertstrasse 4**
**81675 München (DE)**

(54) **Mobile communication system capable of reducing a traffic between a control station and base stations**

(57) A mobile communication system comprises a control station connected a plurality of base stations each of which communicates with a plurality of mobile stations. Each of the base stations receives a transmission signal as a reception signal transmitted from each of the mobile stations. The reception signal has reception data. Each of the base stations comprises a judging section for judging whether or not reception reliability of the reception signal is favorable and a transmission control section for transmitting the reception data to the control station when the reception reliability is favorable. The transmission control section inhibits transmission of the reception data to the control station when the reception reliability is not favorable.

FIG. 1

Printed by Xerox (UK) Business Services
2.16.7 (HRS)/3.6

**Description**

This invention relates to a mobile communication system having a control station connected to a plurality of base stations through a network.

In general, a mobile communication system is known which comprises a control station connected to a plurality of radio base stations through a wired network. Each of the radio base station has a communication area and communicates with a mobile station when the mobile station is located at the communication area.

It will be assumed that a mobile station is locates at a position at which the mobile station can communicates with two radio base stations. One of the radio base stations will be called a first radio base station. Another one of the radio base stations will be called a second radio base station. From the mobile station, the first and the second base stations receive a transmission signal as first and second reception signals, respectively. The first and the second base stations produces first and second reception reliability data in accordance with the first and the second reception signals, respectively.

To the control station, the first and the second base stations transmit the first and the second reception signals together with the first and the second reception reliability data. The control station selects one of the first and the second reception signals as a selected reception signal on the basis of the first and the second reception reliability data. For example, the control station selects one of the first and the second reception signals as the selected reception signal having a high reliability. The control station carries out a predetermined data process of the selected reception signal.

As readily understood from the above description, it is necessary for a base station to transmit a reception signal together with a reception reliability data to the control station. As a result, a traffic increases in the wired network.

In case of an encoded voice, it is sufficient that a transmission speed is 8 kbps to 10 kbps. When the encoded voice is accompanied by reception reliability data, the traffic increases by about 10%. In addition, the traffic further increases in the wired network since the first and the second reception signals transmitted together with the first and the second reception reliability data to the control station.

It is therefore an object of this invention to provide a mobile communication system capable of reducing an upward traffic between a control station and base stations.

Other objects of this invention will become clear as the description proceeds.

On describing the gist of this invention, it is possible to understand that a mobile communication system comprises a control station connected a plurality of base stations each of which communicates with a plurality of mobile stations. Each of the base stations receives a transmission signal as a reception signal transmitted from each of the mobile stations. The reception signal has reception data.

According to a first aspect of this invention, each of the base stations comprises judging means for judging whether or not reception reliability of the reception signal is favorable and transmission control means for transmitting the reception data to the control station when the reception reliability is favorable, the transmission control means inhibiting transmission of the reception data to the control station when the reception reliability is not favorable.

According to a second aspect of this invention, each of the base stations comprises first judging means for judging whether or not reception reliability of the reception signal is favorable to produce a first judgement result, second judging means for judging a magnitude of change in the reception reliability to produce a second judgement result, first determining means for determining whether or not the reception data is transmitted to the control station on the basis of the first judgement result to produce a first determination result, second determining means for determining whether or not reliability data is transmitted to the control station on the basis of the second judgement result to produce a second determination result, and transmission means for transmitting each of the reception data and the reliability data in packet form to the control station in accordance with the first and the second determination results. The control station comprises reception means for receiving the reception data and the reliability data from each of the base stations and selection means for selecting one of the reception data as selected reception data having a highest reliability on the basis of the reception reliability data to synthesize the selected data to synthesized data.

Fig. 1 is a block diagram of a mobile communication system according to a preferred embodiment of this invention;

Fig. 2 is a block diagram of selective synthesizing system used in the mobile communication system illustrated in Fig. 1;

Fig. 3 is a block diagram of a reliability data processing unit in the radio base station illustrated in Fig. 1;

Fig. 4 shows a view for illustrating contents stored in a differential threshold value table illustrated in Fig. 3;

Fig. 5 shows a view for explaining an up packet transmission/non-transmission control for a change in the reception electric field intensity;

Fig. 6 shows a view for explaining a change in contents of a hysteresis management table illustrated in Fig. 3;

Fig. 7 is a flow chart for describing the transmission/non-transmission control in a radio base station;

Fig. 8 is a block diagram of a reliability data selection unit in the control station;

Fig. 9A shows a view for describing changes in the reception electric field intensities detected in the radio base stations;

Fig. 9B shows a view for describing the packet transmission/non-transmission in one of the radio base stations in Fig. 9A;

Fig. 9C shows a view for describing the packet transmission/non-transmission in another one of the radio base stations in Fig. 9A;

Fig. 9D shows a view for describing a selective synthesis of reception data executed in a control station in Figs. 9B and 9C.

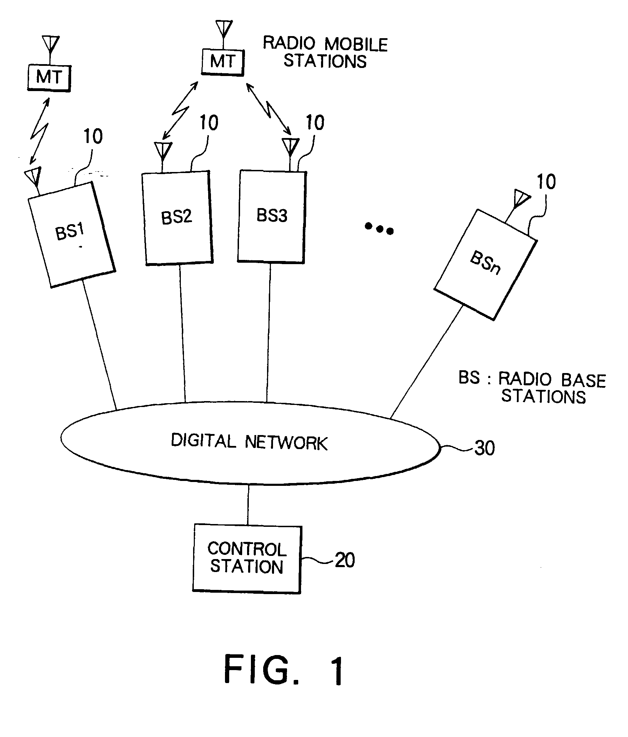

Referring to Fig. 1, description will proceed to a mobile communication system according to a preferred embodiment of this invention. The mobile communication system comprises radio base stations 10 of N. N is a positive integer which is greater than two. A control station 20 is connected to the radio base stations 10 through a digital network 30 and controls the radio base stations 10. The digital network 30 includes a packet exchange or an asynchronous transfer mode (ATM) network. The whole network 30 does not need be in the form of packet/ATM and may have a conventional network. Furthermore, the control station may simply be connected to the radio base stations through exclusive lines.

When the reception data are received at the radio base stations from the radio mobile stations in the mobile communication system, the reception data are selected depending on the reliability data such as the reception electric field intensity. The reception data having low reliability are not transmitted to the control station 20. The reception data having a sufficiently high reliability are transmitted to the control station 20. The reliability data is transmitted only when there is a change larger than a reference. When the reception data of the same radio mobile station are received from a plurality of radio base stations, the control station 20 selects reception data of high reliability in accordance with the reliability data and synthesizes the reception data.

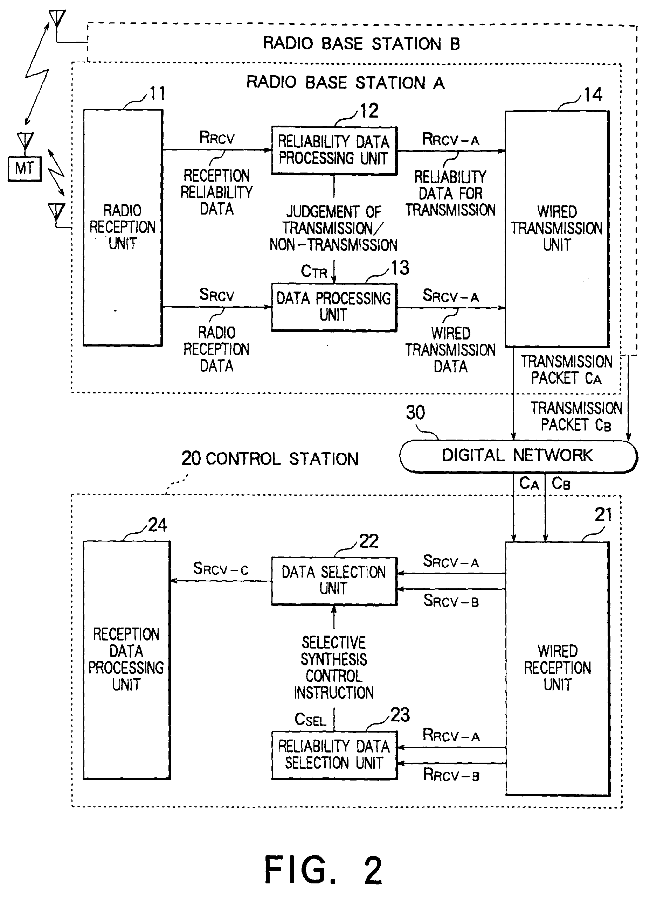

Referring to Fig. 2, description will proceed to a selective synthesizing system. In order to simplify description, only two radio base stations A and B are exemplified among a plurality of radio base stations 10. Though the internal constitution is only shown concerning the radio base station A, the same also holds even for other radio base stations. Here, however, the transmission system for transmitting signals to the radio mobile stations is not shown.

In Fig. 2, the radio base station A has a radio reception unit 11 for receiving signals transmitted from a mobile station. In accordance with the reception signal, the radio reception unit 11 sends reception reliability data $R_{RCV}$ and reception data $S_{RCV}$ to a reliability data processing unit 12 and to a data processing unit 13. As the reception reliability data $R_{RCV}$, there can be used a reception electric field intensity or a bit error rate. In order to finely trap the change in the reception reliability. In the example being illustrated, the reception electric field intensity is used.

As will be described later, the reliability data processing unit 12 forms reliability data $R_{RCV-A}$ for transmission and a judging signal CTR for controlling the data transmission/non-transmission in the data processing unit 13 on the basis of the reception reliability data $R_{RCV}$ from the radio reception unit 11. The reliability data $R_{RV-A}$ for transmission is not transmitted when it is smaller than a predetermined threshold value. Even when it is larger than the predetermined threshold value, it is not generated as the reliability data $R_{RCV-A}$ for transmission when it is smaller than a permissible variable range, as will be described later.

On the Basis on the judging signal CTR, the data processing unit 13 selects the data to be transmitted to the control station 20 out of the reception data $S_{RCV}$, i.e., selects only those data having high reliability. The data processing unit 13 sends them as wired transmission data $S_{RCV-A}$ to the wired transmission unit 14. The wired transmission unit 14 fabricates a reliability data packet $C_{A-2}$ and a data packet $C_{A-1}$ as transmission packets from the reliability data $R_{RCV-A}$ for transmission and the wired transmission data $S_{RCV-A}$. The wired transmission unit 14 transmits them to the control station 20 through the network 30. The same also holds for other radio base stations; i.e., the radio base station B fabricates transmission packets from the reliability data $R_{RCV-B}$ for transmission and the wired transmission data $S_{RCV-B}$. The radio base station B transmits them to the control station 20 through the network 30. The transmission/reception control in each radio base station is executed by a processor which is not shown.

Among the reception data, those having low reception reliability are canceled in the radio base stations. Only those packets of data having high reception reliability are transmitted to the control station 20. Even when the reception reliability is high, the packets of reliability data are not transmitted when a change in the reliability data is smaller than a permissible range. This can be coped with by using reliability data transmitted in the previous time. Therefore, the reliability data is transmitted by the wired line only when it is necessary, and unnecessary data is restricted to be transmitted, making it possible to greatly reduce the up traffic on the network 30.

The control station 20 has a wired reception unit 21 connected to the network 30. The control station 20 receives packets from the radio base stations. The wired reception unit 21 isolates the communication data of the radio mobile stations and the corresponding reliability data from the packet data received from the radio base stations. The wired reception unit 21 sends them to a data selection unit 22 and a reliability data selection unit 23, respectively. For instance, when the data packet $C_{A1}$ and the reliability data packet $C_{A2}$ are received from the radio base station A, and the data packet $C_{B1}$ and the reliability data packet $C_{B2}$ are received from the radio base station B, the wired reception unit 21 isolates the communication data $S_{RCV-A}$ from the data packet CA1, isolates the reliabilty data $R_{RCV-A}$ from the corresponding reliability data packet CA2, and sends them to the data selection unit 22 and to the reliability data selection unit 23. The same holds for the case of the data packet $C_{B1}$ and reliability data packet $C_{B2}$.

From the reliability data $R_{RCV-A}$ and $R_{RCV-B}$, the reliability data selection unit 23 finds $R_{RCV}$ in the station A and $R_{RCV}$ in the station B, compares them, and sends, to the data selection unit 22, a selective synthesis control instruction $C_{SEL}$ indicating which one of them should be selected. In compliance with the selective synthesis control instruction $C_{SEL}$, the data selection unit 22 selects either the communication data $S_{RCV-A}$ or $S_{RCV-B}$ having higher reliability, and sends the selected data as a synthesizing data $S_{RCV-C}$ to a reception data processing unit 24.

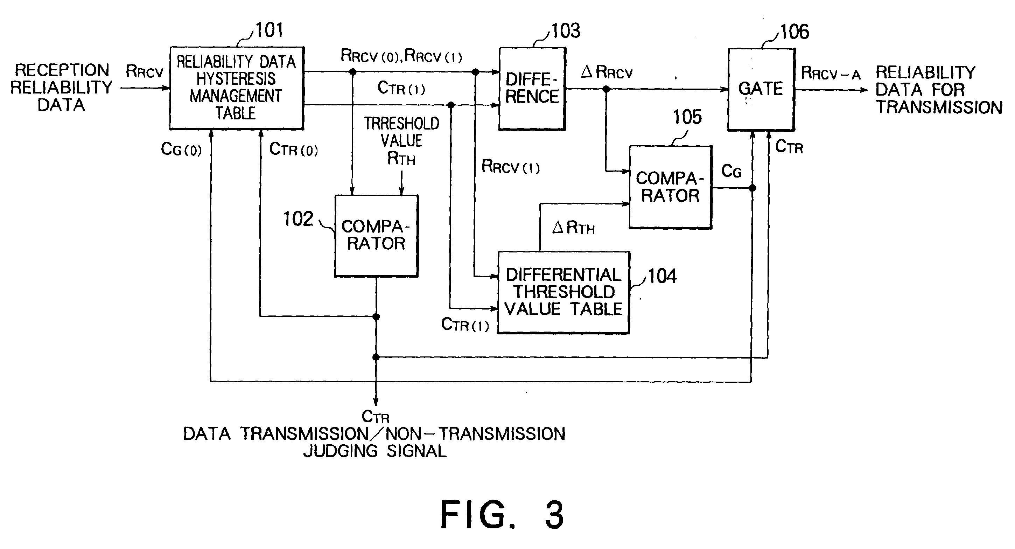

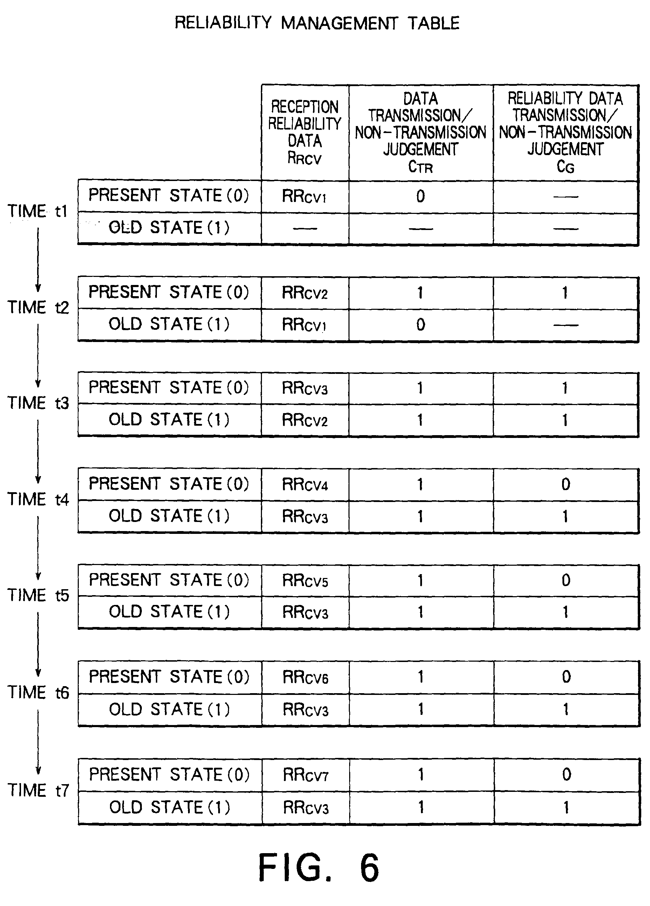

Referring to Fig. 3, the reliability data processing unit 12 in each radio base station 10 is provided with a hysteresis management table 101 in which a predetermined number of reception reliability data $R_{RCV}$, transmission/non-transmission judging signals $C_{TR}$ and difference judging signals $C_G$ are stored in time series and are successively updated. In this embodiment as will be described in detail with reference to Fig. 6, $R_{RCV}(0)$, $C_{TR}(0)$ and $C_G(0)$ representing the latest state, and $R_{RCV}(1)$, $C_{TR}(1)$ and $C_G(1)$ representing the old state are stored and are successively updated.

The latest reception reliability data $R_{RCV}(0)$ is compared by a comparator 102 with a threshold value $R_{TH}$, and the compared result is sent as a transmission/non-transmission judging signal $C_{TR}$ to the data processing unit 13. When $R_{RCV}(0)>R_{TH}$, the transmission judgement ($C_{TR}=1$) is rendered and when $R_{RCV}(0)\leqq R_{TH}$, the non-transmission judgement ($C_{TH}=0$) is rendered.

The hysteresis management table 101 sends new and old reception reliability data $R_{RCV}(0)$ and $R_{RCV}(1)$ as well as the old transmission/non-transmission judging signal $C_{TR}(1)$ to a differential arithmetic unit 103 and a differential threshold value table 104. The differential arithmetic unit 103 operates the difference $\Delta R_{RCV}$ between the new reception reliability data $R_{RCV}(0)$ and the old reception reliability data $R_{RCV}(1)$, and sends it to a comparator 105 and a gate 106. In the case of the old transmission/non-transmission judging signal $C_{TR}(1)=0$, however, it is regarded that the old reception reliability data $R_{RCV}(1)=0$. Therefore, the new reception reliability data $R_{RCV}(0)$ is output as a differential value $\Delta R_{RCV}$. Whether the data that is transmitted is the new reception reliability data $R_{RCV}(0)$ or the calculated difference, is distinguished by adding a flag representing an absolute value or a difference to the header of the transmitted packet.

The differential threshold value table 104 is storing in advance, in the form of a table, a permissible differential value range $\Delta R_{TH}$ that varies depending upon the magnitude of the reception reliability data. The permissible differential value range $\Delta R_{TH}$ corresponding to the old reception reliability data $R_{RCV}(1)$ is read out and is output to the comparator 105. When no data was transmitted in the previous time, however, the range $\Delta R_{TH}$ is set to a sufficiently large value, so that $R_{RCV}(0)$ output from the differential arithmetic unit 103 is transmitted.

The comparator 105 compares the differential value $\Delta R_{RCV}$ with $\pm \Delta R_{TH}$ to judge whether the differential value $\Delta R_{RCV}$ is lying in the range $\pm \Delta R_{TH}$ with the old reception reliability data $R_{RCV}(1)$ as a center or not. The difference judging signal $C_G$ which is the result of comparison is output to a gate 106 and to the hysteresis management table 101.

The gate 106 determines whether the reliability data $R_{RCV-A}$ be transmitted or not depending upon the transmission/non-transmission judging signal $C_{TR}$ input from the comparator 102 and the difference judging signal $C_G$ input from the comparator 105. If described in further detail, when the reception reliability data $R_{RCV}(0)$ is smaller than the threshold value $R_{TH}$ (non-transmission judgement is rendered: $C_{TR}=0$), the gate 106 is closed and the reliability data is not transmitted.

When the differential value $\Delta R_{RCV}$ is larger than the range $\pm \Delta R_{TH}$, the gate 106 is opened, whereby the differential value $\Delta R_{RCV}$ is sent as reliability data for transmission $R_{RCV-A}$ ($R_{RCV-B}$ in the radio base station B) to the wired transmission unit 14, and is transmitted as a packet to the control station 20. Conversely, when the differential value $\Delta R_{RCV}$ is within the range $\pm \Delta R_{TH}$, the reliability data of the previous time can be used and it is, hence, so judged that the reliability data needs not be transmitted. Therefore, the gate 106 is closed, and the reliability data is not transmitted as a packet.

The functional constitution shown in Fig. 3 can be realized as a hardware by using an exclusively designed LSI but is, in many cases, realized by executing a control program by using a program-controlled processor such as CPU.

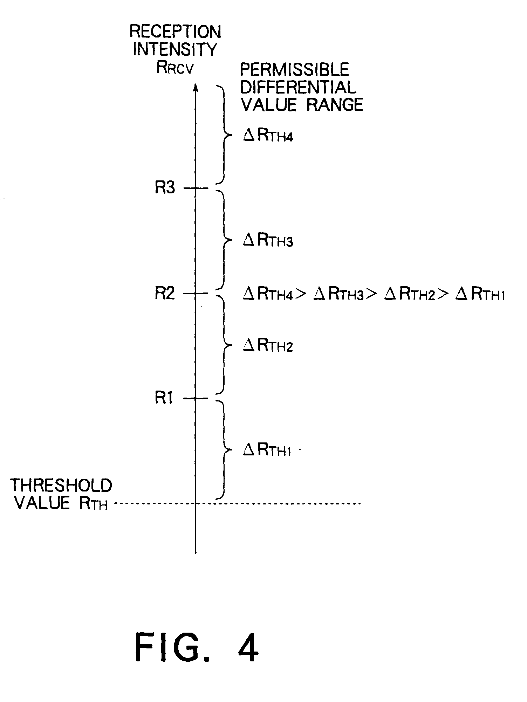

Referring to Fig. 4, the permissible differential value range $\Delta R_{TH}$ has been set to increase with an increase in the reception intensity $R_{RCV}$. Here, the reception intensity of not smaller than the threshold value $R_{TH}$ is roughly divided into four; i.e., the reception intensity is set to the smallest permissible differential value range $\Delta R_{TH1}$ up to a reception intensity R1, set to a permissible differential value range $\Delta R_{TH2}$ up to a reception intensity R2, and is set to a permissible differential value range $\Delta R_{TH3}$ up to a reception intensity R3. For the reception intensity which is not smaller than R3, the greatest permissible differential value range $\Delta R_{TH4}$ is set.

When the reception intensity is small, therefore, the permissible differential value range $\Delta R_{TH}$ becomes narrow, and a new reliability data packet is transmitted even when the reception intensity changes in small amounts. As the reception intensity increases, on the other hand, the permissible differential value range $\Delta R_{TH}$ is broadened, and the reliability data packet is not transmitted when the reception intensity varies in small amounts.

It is here presumed that the up radio signal from a radio mobile station to a radio base station is detected for its reception electric field intensity at a predetermined interval by the radio reception unit 11 in each radio base station. When, for example, TDMA is used as a radio communication system, it can be contrived to detect the reception electric field intensity at the reception slot timing.

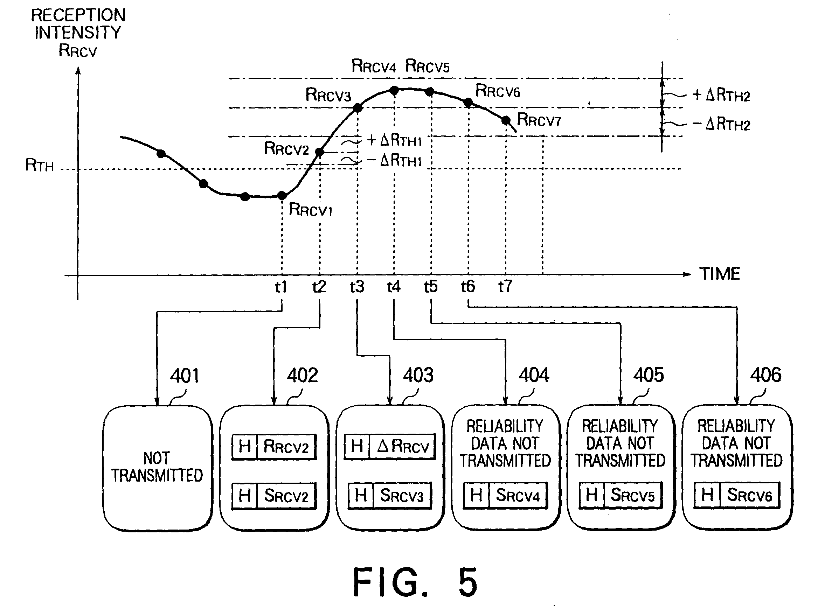

Referring to Fig. 5, it is assumed that the reception electric field intensity $R_{RCV1}$ detected at a time t1 is smaller than the threshold value $R_{TH}$, the reception electric field intensity $R_{RCV2}$ at a time t2 is larger than the threshold value $T_{TH}$, and a change from the reception electric field intensity $R_{RCV2}$ at the time t2 to the reception electric field intensity $R_{RCV3}$ at a time t3 exceeds the predetermined permissible range $\pm\Delta R_{TH1}$ shown in Fig. 4. It is further presumed that the reception electric field intensity varies within a predetermined permissible range $\pm\Delta R_{TH2}$ from the time t3 to a time t7. When the reception electric field intensity varies as described above, the reliability data corresponding to the time t1 and the data are not transmitted as packets. At times t2 and t3, the information and data are transmitted as packets and at time t4 to time t7, the reliability data is not transmitted but the data is transmitted as a packet.

Since a difference in the reception electric field intensity $R_{RCV}$ is used as reliability data, the reliability data packet is shorter than the reception data packet that carries the reception data $S_{RCV}$. Further, a high-speed circuit is usually used for connecting the plurality of radio base stations to the control station. In the control station 20, therefore, the corresponding reliability data can be delivered before the frame processing of the reception data is finished, and the processing is accomplished in real-time. The operation for controlling the up packet transmission/non-transmission will now be described with reference to the states of electromagnetic waves shown in Fig. 5.

Referring to Fig. 6, the hysteresis management table 101 stores $R_{RCV}(0)$, $C_{TR}(0)$ and $C_G(0)$ representing the latest state and $R_{RCV}(1)$, $C_{TR}(1)$ and $C_G(1)$ representing the old state, the stored contents being successively updated during the period of from time t1 to time t7 as shown.

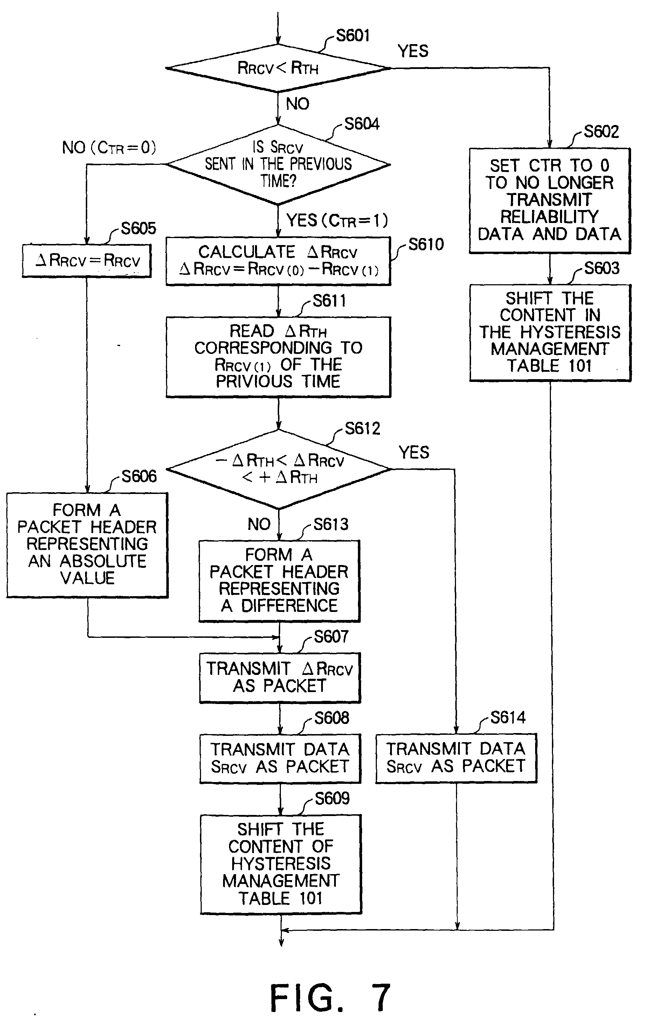

The up packet transmission/non-transmission control operation will now be described in detail in line with the flow chart of Fig. 7 with reference to Figs. 5 and 6. First, the reception electric field intensity $R_{RCV1}$ is detected at the time t1 and is stored as the latest reception electric field intensity $R_{RCV}(0)$ in the hysteresis management table 101 of the reliability data processing unit 12. The comparator 102 compares the reception electric field intensity $R_{RCV1}$ with the threshold value $R_{TH}$, and outputs the result as a transmission/non-transmission judging signal $C_{TR}$ (step S601).

The reception electric field intensity $R_{RCV1}$ at the time t1 is smaller than the threshold value $R_{TH}$ (YES at step S601) and, hence, the comparator 102 sends the non-transmission judging signal $C_{TR}=0$ to the gate 106 and the data processing unit 13 (step S602) as described above. Therefore, neither the reception data $S_{RCV1}$ is transmitted as packet nor the reception electric field intensity $R_{RCV1}$ is transmitted as packet (see 401 in Fig. 5). In other words, the data packet carrying reception data $S_{RCV1}$ of such a low reliability and the reliability data packet are not sent to the network 30.

The non-transmission judging signal $C_{TR}=0$ is stored in the hysteresis management table 101. Therefore, the hysteresis management table 101 at the time t1 has a state that it stores the reception electric field intensity $R_{RCV1}$ and the non-transmission judging signal $C_{TR}=0$ as shown in Fig. 6. Then, the content of the hysteresis management table 101 is shifted, and the reception electric field intensity $R_{RCV1}$ and the non-transmission judging signal $C_{TR}=0$ stored at the time t1 turn into the old reception electric field intensity $R_{RCV}(1)$ and the judging signal $C_{TR}(1)$ (step S603).

Then, the reception electric field intensity $R_{RCV2}$ is detected at the time t2 and is stored in the hysteresis management table 101 as the latest reception electric field intensity $R_{RCV}(0)$. Accordingly, the hysteresis management table 101 stores $R_{RCV2}$ as the latest reception electric field intensity $R_{RCV}(0)$, and stores $R_{RCV1}$ and $C_{TR}=0$ as the old reception electric field intensity $R_{RCV}(1)$ and judging signal $C_{TR}(1)$ (see Fig. 6). The reception electric field intensity $R_{RCV2}$ at the time t2 is larger than the threshold value $R_{TH}$ (NO at step S601) and, hence, the comparator 102 sends the transmission judging signal $C_{TR}=1$ to the hysteresis management table 101, the gate 106 and the data processing unit 13. Furthermore, it is judged whether the data $S_{RCV1}$ of the previous time (here, time t1) is transmitted or not by making reference to the old judging signal $C_{TR}(1)$ in the hysteresis management table 101 (step S604). In this case, the judging signal $C_{TR}(1)$ of the previous time is $C_{TR}=0$ (NO at step S604) and, hence, $R_{RCV2}$ which is the latest reception reliability data $R_{RCV}(0)$ is used as the differential value $\Delta R_{RCV}$ (step S605), and data representing an absolute value is added to the header of the transmission packet (step S606).

When no data was transmitted in the previous time (NO at step S604), the difference judging signal $C_G$ of the comparator 105 is so set as to open the gate 106 ($C_G=1$) as described above. Therefore, the packet carrying the differential value $\Delta R_{RCV}=R_{RCV2}$ is transmitted to the control station 20 (step S607). Furthermore, the comparator 102 outputs the transmission judging signal $C_{TR}=1$ and, hence, a packet is also transmitted carrying the reception data $S_{RCV2}$ at the time t2 (step S608). Thus, the packet of reception data $S_{RCV2}$ and the packet of reception electric field intensity $R_{RCV2}$ are transmitted (see 402 in Fig. 5).

The transmission judging signal $C_{TR}=1$ and the difference judging signal $C_G=1$ are stored in the hysteresis management table 101. Accordingly, the hysteresis management table 101 at the time t2 stores, as shown in Fig. 6, old reception electric field intensity $R_{RCV1}$ and non-transmission judging signal $C_{TR}=0$, as well as new reception electric field intensity $R_{RCV2}$, transmission judging signal $C_{TR}=1$ and difference judging signal $C_G=1$. Then, the content of the hysteresis management table 101 is shifted, and the reception electric field intensity $R_{RCV2}$, the transmission judging signal $C_{TR}=1$ and the difference judging signal $C_G=1$ stored at the time t2 turn into the old reception electric field intensity $R_{RCV}(1)$, judging signal $C_{TR}(1)$ and difference judging signal $C_G(1)$ (step S609).

Then, a reception electric field intensity $R_{RCV3}$ is detected at the time t3 and is stored in the hysteresis management table 101 as the latest reception electric field intensity $R_{RCV}(0)$. Therefore, the hysteresis management table 101 stores $R_{RCV3}$ as the latest reception electric field intensity $R_{RCV}(0)$, and stores $R_{RCV2}$, $C_{TR}=1$ and $C_G=1$ as the old reception electric field intensity $R_{RCV}(1)$, the judging signal $C_{TR}(1)$ and the difference judging signal $C_G(1)$ (see Fig. 6).

Since the reception electric field intensity $R_{RCV3}$ at the time t3 is larger than the threshold value $R_{TH}$ (NO at step S601), the comparator 102 sends the transmission judging signal $C_{TR}=1$ to the hysteresis management table 101, gate 106 and data processing unit 13. It is further judged whether the data $S_{RCV2}$ was transmitted in the previous time (here, time t2) or not by making reference to the old judging signal $C_{TR}(1)$ in the hysteresis management table 101 (step S604). In this case, the judging signal $C_{TR}(1)$ of the previous time is $C_{TR}=1$ (YES at step S604). Therefore, the differential arithmetic unit 103 calculates the differential value $\Delta R_{RCV}=R_{RCV}(0)-R_{RCV}(1)$ between the new reception electric field intensity and the old reception electric field intensity (step S610). Here, the differential value $\Delta R_{RCV}=R_{RCV3}-R_{RCV2}$ is calculated.

At the same time, the differential threshold value table 104 receives the reception electric field intensity $R_{RCV}(1)$ of the previous time from the hysteresis management table 101, reads the corresponding permissible range $\Delta R_{TH}$ and sends it to the comparator 105 (step S611). The comparator 105 compares the differential value $\Delta R_{RCV}$ with $\pm\Delta R_{TH}$ and judges whether the differential value $\Delta R_{RCV}$ is lying within the range $\pm\Delta R_{TH}$ with the old reception electric field intensity $R_{RCV}(1)$ as a center or not (step S612). At the time t3, it is judged whether $-\Delta R_{TH}<(R_{RCV3}-R_{RCV2})<+\Delta R_{TH}$ or not.

In this case, the differential value $\Delta R_{RCV}=(R_{RCV3}-R_{RCV2})$ is larger than $\Delta R_{TH}$ (NO at step S612). Therefore, the comparator 105 outputs the differential judging signal $C_G=1$ to the gate 106 and the hysteresis management table 101, and adds data representing a difference to the header of the transmission packet (step S613). The transmission judging signal $C_{TR}=1$ and the difference judging signal $C_G=1$ permit the gate 106 to open, whereby a packet carrying the differential value $\Delta R_{RCV}=R_{RCV3}-R_{RCV2}$ is transmitted to the control station 20 (step S607). Furthermore, the comparator 102 outputs the transmission judging signal $C_{TR}=1$ and, hence, a packet carrying the reception data $S_{RCV3}$ at the time t3 is also transmitted (step S608). Thus, the packet of the reception data $S_{RCV3}$ and the packet of the differential value $\Delta R_{RCV}$ in the reception electric field intensity are transmitted, respectively (see 403 in Fig. 5).

The transmission judging signal $C_{TR}=1$ and the difference judging signal $C_G=1$ are stored in the hysteresis management table 101. As shown in Fig. 5, therefore, the hysteresis management table 101 at the time t3 stores the old reception electric field intensity $R_{RCV2}$, transmission judging signal $C_{TR}=1$ and difference judging signal $C_G=1$ and stores the new reception electric field intensity $R_{RCV3}$, the transmission judging signal $C_{TR}=1$ and the difference judging signal $C_G=1$. Then, the content of the hysteresis management table 101 is shifted, and the reception electric field intensity $R_{RCV3}$, transmission judging signal $C_{TR}=1$ and difference judging signal $C_G=1$ stored at the moment t3 turn into the old reception electric field intensity $R_{RCV}(1)$, the judging signal $C_{TR}(1)$ and the difference judging signal $C_G(1)$ (step S609).

A reception electric field intensity $R_{RCV4}$ is detected at a time t4 and is stored in the hysteresis management table 101 as the latest reception electric field intensity $R_{RCV}(0)$. Accordingly, the hysteresis management table 101 stores $R_{RCV4}$ as the latest reception electric field intensity $R_{RCV}(1)$, and the stores $R_{RCV3}$, $C_{TR}=1$ and $C_G=1$ as the old reception electric field intensity $R_{RCV}(0)$, the judging signal $C_{TR}(1)$ and difference judging signal $C_G(1)$ (see Fig. 6). The reception electric field intensity $R_{RCV3}$ at the time t4 is larger than the threshold value $R_{TH}$ (NO at step S601) and the judging signal $C_{TR}(1)$ in the previous time is $C_{TR}=1$ (YES at step S604). Therefore, the processings are conducted according to steps S610 to S612 like at the time t3.

As shown in Fig. 5, the differential value $\Delta R_{RCV}=R_{RCV4}-R_{RCV3}$ is satisfying $\Delta R_{TH}<(R_{RCV4}-R_{RCV3})<+\Delta R_{TH}$ (YES at step S612). Therefore, the comparator 105 sends the difference judging signal $C_G=0$ to the gate 106 and hysteresis management table 101, whereby the gate 106 is closed and no reliability data is transmitted. Since the comparator 102 produces the transmission judging signal $C_{TR}=1$, a packet is transmitted carrying the reception data $S_{RCV4}$ at the time t4 (step S614). Thus, the packet of the reliability data is not transmitted but the packet of the reception data SRCV4 only is transmitted (see 404 in Fig. 5).

When $\Delta R_{TH} < (R_{RCV4} - R_{RCV3}) < +\Delta RTH$ is satisfied (YES at step S612), the content of the hysteresis management table 101 is not shifted. Accordingly, the subsequent processing at a time t5 is executed while the old reception electric field intensity $R_{RCV3}$, transmission judging signal $C_{TR}=1$ and difference judging signal $C_G=1$ are being stored. At a time t5, a reception electric field intensity $R_{RCV5}$ is detected and is stored in the hysteresis management table 101 as the latest reception electric field intensity $R_{RCV}(0)$. Therefore, the hysteresis management table 101 stores $R_{RCV5}$ as the latest reception electric field intensity $R_{RCV}(0)$, and stores $R_{RCV3}$, $C_{TR}=1$ and $C_G=1$ as the old reception electric field intensity RRCV(1), the judging signal $C_{TR}(1)$ and the difference judging signal $C_G(1)$(see Fig. 6).

The reception electric field intensity $R_{RCV5}$ at the time t5 is larger than the threshold value $R_{TH}$ (NO at step S601), the judging signal CTR(1) of the previous time is $C_{TR}=1$ (YES at step S604), and $\Delta R_{TH} < (R_{RCV5} - R_{RCV3}) < +\Delta R_{TH}$ is being satisfied (YES at step S612). Like at the time t4, therefore, the processings are conducted according to steps S610 to S614. That is, the packet of reliability data is not transmitted but packet of reception data $S_{RCV5}$ only is transmitted (see 405 in Fig. 5). Since the content of the hysteresis management table 101 is not shifted, the subsequent processing at a time t6 is executed while storing the old reception electric field intensity $R_{RCV3}$, transmission judging signal $C_{TR}=1$ and difference judging signal $C_G=1$.

Thus, as far as the reception electric field intensity $R_{RCV}$ remains within the permissible range $R_{RCV3} \pm \Delta R_{TH}$ at step S612, the processings of steps S601, S604, S610 to S612 and S614 are repeated, and the packet of reception data $S_{RCV}$ only is transmitted. In Fig. 6, similar processings are repeated at times t6 and t7 (see 406 in Fig. 5). When the reception electric field intensity $R_{RCV}$ lies outside the permissible range $R_{RCV3} \pm \Delta R_{TH}$ (NO at step S612), steps S613 and S607 to S609 are executed like at the time t3, and both the packet carrying the difference in the reception electric field intensity and the packet of data $S_{RCV}$ are transmitted.

Described below in detail is a case where the packets of reception data of the same radio mobile station are transmitted from the radio base stations A and B shown in Fig. 2, and are selectively synthesized at the control station 20.

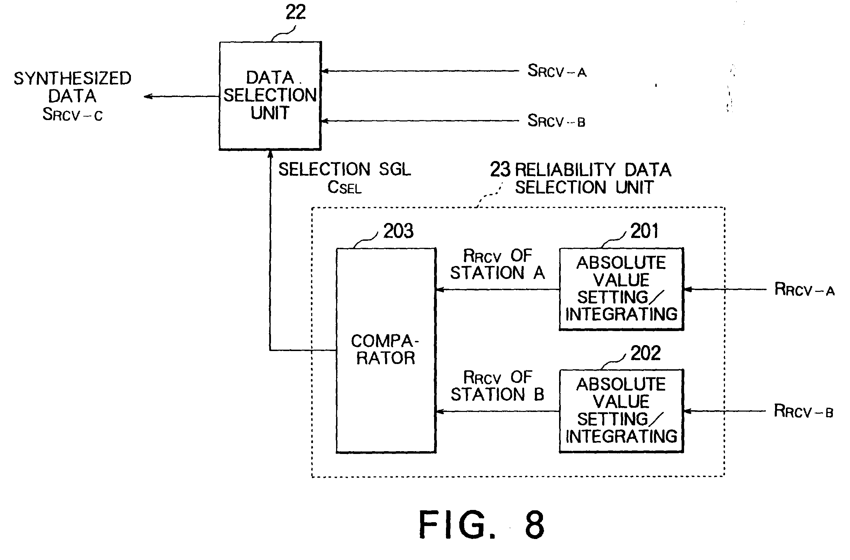

Referring to Fig. 8, the reliability data selection unit 23 comprises absolute value setting/integrating arithmetic units 201, 202 and a comparator 203 for comparing their outputs. The absolute value setting/integrating arithmetic units 201 and 202 set the reliability data $R_{RCV-A}$ and $R_{RCV-B}$ as absolute values and integrate them, and send the operated results to the comparator 203. As described above, the reliability data $R_{RCV-A}$ and $R_{RCV-B}$ are transmitted as differential values or as absolute values by the differential arithmetic unit 103, and can, hence, be restored into the initial reliability data by the absolute value setting/integrating arithmetic units 201 and 202. Whether the reliability data are transmitted as differential values or absolute values can be learned by making reference to the data added to the headers of the reception packets. The thus restored reliability data are compared by the comparator 203, and a selective synthesis control instruction $C_{SEL}$ indicating which one of them be selected is output to the data selection unit 22.

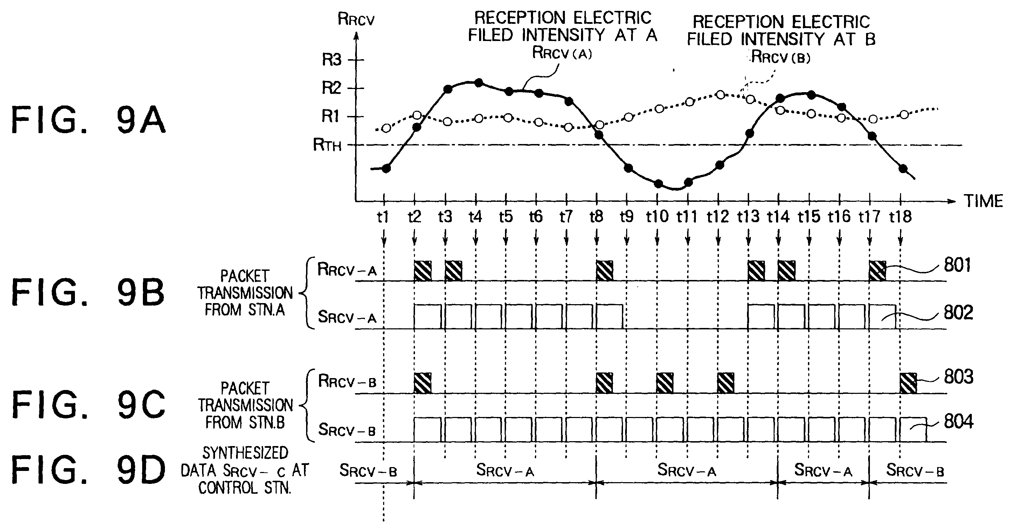

In Fig. 9A, the reception electric field intensity $R_{RCV(A)}$ is greatly changing at the radio base station A, and the received electric field intensity $R_{RCV(B)}$ at the radio base station B remains stable changing hardly. Concretely speaking, the reception electric field intensity $R_{RCV(A)}$ at the radio base station A becomes larger than the threshold value $R_{TH}$ at a time t2, becomes larger than the reception electric field intensity $R_{RCV(B)}$ at the radio base station B at a time t3, but becomes smaller than the reception electric field intensity $R_{RCV(B)}$ at a time t8 and becomes smaller than the threshold value $R_{TH}$ at a time t9. Similarly, the reception electric field intensity $R_{RCV(A)}$ becomes larger than the threshold value $R_{TH}$ again at a time t13 and larger than the reception electric field intensity $R_{RCV(B)}$ at a time t14, but becomes smaller than the reception electric field intensity $R_{RCV(B)}$ again at a time t17 and smaller than the threshold value $R_{TH}$ at a time t18. The reception electric field intensity $R_{RCV(B)}$ at the radio base station B remains larger than the threshold value $R_{TH}$ at all times, and does not substantially change except at the vicinity of the times t2, t8, t10, t12 and t18, i.e., does not so change as to deviate out of the permissible range $R_{RCV} \pm \Delta R_{TH}$.

In Figs. 9B and 9C, the reception electric field intensity $R_{RCV(A)}$ is greatly changing at the radio base station A as described in detail with reference to Figs. 5 to 7. Therefore, neither the reliability data packet 801 nor the data packet 802 is transmitted at times t1, t9 to t12 and t18 at which the reception electric field intensity becomes smaller than the threshold value $R_{TH}$. The data packet 802 is transmitted at times t2 to t8 and t13 to t17 at which the reception electric field intensity becomes larger than the threshold value $R_{TH}$, and the reliability data packet 801 is transmitted only during the period in which the difference in the reception electric field intensity $R_{RCV(A)}$ becomes larger than the permissible differential value range $R_{RCV} \pm \Delta R_{TH}$. Here, no reliability data packet 801 is transmitted at times t4 to t7 and t15, t16.

The reception electric field intensity $R_{RCV(B)}$ at the radio base station B remains always larger than the threshold value $R_{TH}$. Therefore, the reception data 804 is transmitted at all times. However, the reliability data packet 803 is not transmitted except when the difference in the reception electric field intensity $R_{RCV(B)}$ becomes larger than the permissible differential value range $R_{RCV} \pm \Delta R_{TH}$ (near t2, t8, t10, t12 and t18). Since the transmission/non-transmission of the data packet and reliability data packet are controlled as described above, traffic of the network 30 can be greatly decreased compared to that of the prior art.

The control station 20 receives the reception data $S_{RCV-B}$ from the radio base station B at every moment but receives the reception data $S_{RCV-A}$ from the ratio base station A at the times t2 to t8 and t13 to t17 only. However, the reception data $S_{RCV-A}$ from the radio base station A is accompanied by the reliability data $R_{RCV-A}$ at the times t2, t3, t8, t12, t13 and t17 only, and the reception data $S_{RCV-B}$ from the radio base station B is accompanied by the reliability data $R_{RCV-B}$ at the times t2, t8, t10, t12 and t18 only. When the reception electric field intensity $R_{RCV(B)}$ varies little, the reliability data transmitted in the previous time can be directly used in a period in which the reception data is not accompanied by the reliability data $R_{RCV-B}$.

In Fig. 9D, $R_{RCV-A} > R_{RCV-B}$ in the period of times t3 to t7 and the period of times t14 to t16 as described above. Therefore, the data selection unit 22 in the control station 20 selects the reception data $S_{RCV-A}$ from the radio base station A according to the instruction $C_{SEL}$ from the reliability data selection unit 23 and, in other periods, selects the reception data $S_{RCV-B}$ from the radio base station B since $R_{RCV-A} < R_{RCV-B}$. As a result of such synthesis, it is thus allowed to synthesize only the reception data from the radio base station that has most favorably received the electromagnetic waves transmitted from a radio mobile station.

Transmission of data having low reliability is canceled on the side of the radio base stations, making it possible to decrease the up traffic. When the reception reliability is so stable that the reliability data need not be transmitted every time, transmission of the reliability data is canceled on the side of the radio base stations, making it possible to further decrease the amount of up traffic.

Besides, the reliability data is transmitted at a timing different from the reception data transmission and is, hence, transmitted at vacant timings as required, making it possible to efficiently use the transmission line between the radio base station and the control station and, hence, to decrease the up traffic.

While this invention has thus far been described in conjunction with the preferred embodiment thereof, it will readily be possible for those skilled in the art to put this invention into practice in various other manners.

## Claims

1.  A mobile communication system comprising a control station connected a plurality of base stations each of which communicates with a plurality of mobile stations, each of said base stations receiving a transmission signal as a reception signal transmitted from each of said mobile stations, said reception signal having reception data, wherein each of said base stations comprises:

    judging means for judging whether or not reception reliability of said reception signal is favorable; and
    transmission control means for transmitting said reception data to said control station when said reception reliability is favorable, said transmission control means inhibiting transmission of said reception data to said control station when said reception reliability is not favorable.

2.  A mobile communication system as claimed in Claim 1, wherein:

    each of said base stations further comprises detection means for detecting a magnitude of change in said reception reliability; and
    said data transmission control means transmitting reliability data to said control station when said magnitude of change is greater than a predetermined permissible range, said data transmission control means inhibiting transmission of said reliability data to said control station when said magnitude of change is not greater than said predetermined permissible range.

3.  A mobile communication system as claimed in Claim 2, wherein said predetermined permissible range is set in said data transmission control means on the basis of said reception reliability.

4.  A mobile communication system as claimed in any one of Claims 2 and 3, wherein said transmission control means transmits said reception reliability data and said reception data to said control station at different timings, respectively.

5.  A mobile communication system as claimed in Claim 2, 3 or 4, wherein said control station comprises:

    reception means for receiving said reception data and said reception reliability data from each of said base stations; and
    selection means for selecting one of said reception data as a selected reception data having a highest reliability in accordance with said reception reliability data.

6.  A mobile communication system as claimed in Claim 5, wherein said control station further comprises holding means for holding said reception reliability data until a next reception reliability data is received at said control station.

7. A mobile communication system comprising a control station connected a plurality of base stations each of which communicates with a plurality of mobile stations, each of said base stations receiving a transmission signal as a reception signal transmitted from each of said mobile stations, said reception signal having reception data, wherein each of said base stations comprises:

first judging means for judging whether or not reception reliability of said reception signal is favorable to produce a first judgement result;
second judging means for judging a magnitude of change in said reception reliability to produce a second judgement result;
first determining means for determining whether or not said reception data is transmitted to said control station on the basis of said first judgement result to produce a first determination result;
second determining means for determining whether or not reliability data is transmitted to said control station on the basis of said second judgement result to produce a second determination result; and
transmission means for transmitting each of said reception data and said reliability data in packet form to said control station in accordance with said first and said second determination results;
said control station comprising:
reception means for receiving said reception data and said reliability data from each of said base stations; and
selection means for selecting one of said reception data as selected reception data having a highest reliability on the basis of said reception reliability data to synthesize said selected data to synthesized data.

8. A mobile communication system as claimed in Claim 7, wherein first determining means determines that said reception data is transmitted in said packet form to said control station when said reception reliability is favorable, said first determining means determining that said reception data and said the reliability data are not transmitted to said control station when said reception reliability is not favorable.

9. A mobile communication system as claimed in any one of Claims 7 and 8, wherein said second determining means determines that said reception reliability data is transmitted in said packet form to said control station when said magnitude of change is greater than a predetermined permissible range, said second determining means determining that said reception reliability data is not transmitted to said control station when said magnitude of change is not greater than said predetermined permissible range.

10. A mobile communication system as claimed in Claim 9, wherein said predetermined permissible range is set in said second determining means on the basis of said reception reliability.

11. A mobile communication system as claimed in any one of Claims 7 to 10, wherein said transmission means transmits the packet of said reception reliability data and the packet of said reception data to said control station at different timings, respectively.

12. A system as claimed in any one of Claims 7 to 11, wherein said reception reliability data is represented by an electric field intensity of said reception signal.

13. A mobile communication system as claimed in Claim 12, wherein said second determining means determines that a difference value is transmitted as said reception reliability data in said packet form to said control station when a magnitude of change is greater in said electric field intensity than a predetermined permissible range, said difference value being a difference between a present electric field intensity and previous electric field intensity, said second determining means determining that said reception reliability data is not transmitted to said control station when said magnitude of change is not greater in said electric field intensity than said predetermined permissible range.

14. A mobile communication system as claimed in Claim 13, wherein said predetermined permissible range is set in said second determining means on the basis of said electric field intensity of said reception signal.

RADIO MOBILE
STATIONS

MT

MT

10

10

10

BS1

BS2

BS3

• • •

BSn

10

BS : RADIO BASE
STATIONS

DIGITAL NETWORK

30

CONTROL
STATION

20

# FIG. 1

RADIO BASE STATION B

RADIO BASE STATION A

RADIO RECEPTION UNIT /11

$R_{RCV}$ RECEPTION RELIABILITY DATA

RELIABILITY DATA PROCESSING UNIT /12

$R_{RCV-A}$ RELIABILITY DATA FOR TRANSMISSION

JUDGEMENT OF TRANSMISSION/ NON-TRANSMISSION

$C_{TR}$

DATA PROCESSING UNIT /13

$S_{RCV}$ RADIO RECEPTION DATA

$S_{RCV-A}$ WIRED TRANSMISSION DATA

WIRED TRANSMISSION UNIT /14

TRANSMISSION PACKET $C_A$

TRANSMISSION PACKET $C_B$

30

DIGITAL NETWORK

$C_A$ | $C_B$

20 CONTROL STATION

RECEPTION DATA PROCESSING UNIT /24

$S_{RCV-C}$

DATA SELECTION UNIT /22

$S_{RCV-A}$

$S_{RCV-B}$

SELECTIVE SYNTHESIS CONTROL INSTRUCTION

$C_{SEL}$

RELIABILITY DATA SELECTION UNIT /23

$R_{RCV-A}$

$R_{RCV-B}$

WIRED RECEPTION UNIT /21

MT

FIG. 2

FIG. 3

RECEPTION
INTENSITY
$R_{RCV}$

PERMISSIBLE
DIFFERENTIAL
VALUE RANGE

$\Delta R_{TH4}$

R3

$\Delta R_{TH3}$

R2

$\Delta R_{TH4} > \Delta R_{TH3} > \Delta R_{TH2} > \Delta R_{TH1}$

$\Delta R_{TH2}$

R1

$\Delta R_{TH1}$

THRESHOLD
VALUE $R_{TH}$

# FIG. 4

FIG. 5

RELIABILITY MANAGEMENT TABLE

| | RECEPTION RELIABILITY DATA $R_{RCV}$ | DATA TRANSMISSION/ NON-TRANSMISSION JUDGEMENT $C_{TR}$ | RELIABILITY DATA TRANSMISSION/ NON-TRANSMISSION JUDGEMENT $C_G$ |
|---|---|---|---|
| TIME t1 | | | |
| PRESENT STATE (0) | $R_{RCV1}$ | 0 | — |
| OLD STATE (1) | — | — | — |
| TIME t2 | | | |
| PRESENT STATE (0) | $R_{RCV2}$ | 1 | 1 |
| OLD STATE (1) | $R_{RCV1}$ | 0 | — |
| TIME t3 | | | |
| PRESENT STATE (0) | $R_{RCV3}$ | 1 | 1 |
| OLD STATE (1) | $R_{RCV2}$ | 1 | 1 |
| TIME t4 | | | |
| PRESENT STATE (0) | $R_{RCV4}$ | 1 | 0 |
| OLD STATE (1) | $R_{RCV3}$ | 1 | 1 |
| TIME t5 | | | |
| PRESENT STATE (0) | $R_{RCV5}$ | 1 | 0 |
| OLD STATE (1) | $R_{RCV3}$ | 1 | 1 |
| TIME t6 | | | |
| PRESENT STATE (0) | $R_{RCV6}$ | 1 | 0 |
| OLD STATE (1) | $R_{RCV3}$ | 1 | 1 |
| TIME t7 | | | |
| PRESENT STATE (0) | $R_{RCV7}$ | 1 | 0 |
| OLD STATE (1) | $R_{RCV3}$ | 1 | 1 |

# FIG. 6

S601

RRCV < RTH — YES

NO

S604

IS SRCV SENT IN THE PREVIOUS TIME?

NO (CTR = 0)

YES (CTR = 1)

S602

SET CTR TO 0 TO NO LONGER TRANSMIT RELIABILITY DATA AND DATA

S605

$\Delta$ RRCV = RRCV

S610

CALCULATE $\Delta$ RRCV
$\Delta$ RRCV = RRCV(0) − RRCV(1)

S603

SHIFT THE CONTENT IN THE HYSTERESIS MANAGEMENT TABLE 101

S611

READ $\Delta$ RTH CORRESPONDING TO RRCV(1) OF THE PRIVIOUS TIME

S612

− $\Delta$ RTH < $\Delta$ RRCV < + $\Delta$ RTH — YES

S606

FORM A PACKET HEADER REPRESENTING AN ABSOLUTE VALUE

NO

S613

FORM A PACKET HEADER REPRESENTING A DIFFERENCE

S607

TRANSMIT $\Delta$ RRCV AS PACKET

S608

TRANSMIT DATA SRCV AS PACKET

S614

TRANSMIT DATA SRCV AS PACKET

S609

SHIFT THE CONTENT OF HYSTERESIS MANAGEMENT TABLE 101

# FIG. 7

FIG. 8

FIG. 9A

$R_{RCV}$

RECEPTION ELECTRIC FILED INTENSITY AT A $R_{RCV}$ (A)

RECEPTION ELECTRIC FILED INTENSITY AT B $R_{RCV}$ (B)

R3
R2
R1
$R_{TH}$

TIME

t1 t2 t3 t4 t5 t6 t7 t8 t9 t10 t11 t12 t13 t14 t15 t16 t17 t18

FIG. 9B

PACKET TRANSMISSION FROM STN.A

$R_{RCV}$ – A    801
$S_{RCV}$ – A    802

FIG. 9C

PACKET TRANSMISSION FROM STN.B

$R_{RCV}$ – B    803
$S_{RCV}$ – B    804

FIG. 9D

SYNTHESIZED DATA $S_{RCV}$ – C AT CONTROL STN.

$S_{RCV}$ – B    $S_{RCV}$ – A    $S_{RCV}$ – A    $S_{RCV}$ – A    $S_{RCV}$ – B

EP 0 998 157 A2